# EUROPÄISCHE PATENTSCHRIFT

(11) **EP 0 897 509 B1**
(45) Veröffentlichungstag und Bekanntmachung des Hinweises auf die Patenterteilung: **10.11.1999**
(21) Anmeldenummer: 97923783.1
(22) Anmeldetag: 05.05.1997
(51) Int. Cl.: F16L 58/06

(54) **BESCHICHTUNG UND VERFAHREN ZUR BESCHICHTUNG VON ROHRLEITUNGEN**
COATING AND PROCESS FOR COATING PIPELINES
REVETEMENT ET PROCEDE POUR REVETIR DES CANALISATIONS

(30) Priorität: 06.05.1996 DE 19617971
(43) Veröffentlichungstag der Anmeldung: 24.02.1999
(73) Patentinhaber: Preussag Rohrsanierung GmbH, 13587 Berlin (DE)
(72) Erfinder: FÖRSTER, Manfred, D-30855 Langenhagen (DE)
(74) Vertreter: Köckeritz, Günter
(86) Internationale Anmeldenummer: DE9700903
(87) Internationale Veröffentlichungsnummer: WO9742444

(56) Entgegenhaltungen:
- WO-A-94/12820

## Beschreibung

Die vorliegende Erfindung betrifft ein Beschichtungsmaterial, welches zur Innensanierung von flüssige und/oder gasförmige Medien führenden Leitungen, insbesondere Fernwärmeleitungen eingesetzt werden kann. Ferner betrifft die Erfindung eine aus dem Beschichtungsmaterial hergestellte Beschichtung sowie ein Verfahren zu ihrer Herstellung.

Rohrleitungen, insbesondere heißgehende Leitungen beziehungsweise Kondensatleitungen in Fernwärmeleitungssystemen weisen häufig große Korrosionsschäden, insbesondere innen am Stahlmantelrohr auf. Die Nutzung der Fernwärme wird zudem durch Anlieger oft zweckentfremdet; so wird dem System gelegentlich auch Heißwasser entnommen. Dies bedeutet. daß der Betreiber dem Kreislaufsystem fortwährend neues Wasser zuspeisen muß. Der Sauerstoff aus dem Frischwasser wiederum fördert die Korrosion der inneren Rohrwand.

Die äußere wie innere Korrosion bewirkt, daß die Rohrwandung, die meist ca. 6 mm stark ist, geschwächt wird.

Die Fernwärmeleitungssysteme werden in Osteuropa, bedingt durch die schlechte Wärmeisolierung, mit sehr hohen Dampftemperaturen gefahren (ca. 200°C), In Westeuropa liegen sie im allgemeinen erheblich niedriger (ca. 140°C).

Bei einem bekannten Verfahren zur Auskleidung mit Zementmörtel von Rohren - insbesondere von Trinkwasser-. Brauchwasser- und Abwasserleitungen - wird das Rohr mit Faserbeton ausgeschleudert. Für Fernwärmeleitungen kommt diese Art der Sanierung jedoch nicht in Betracht, da die fertige Beschichtung zu spröde und die Haftung an der Rohrwandung zu gering ist und somit das Material den hohen Betriebstemperaturen und den großen gelegentlich auftretenden Temperaturschwankungen auf Dauer nicht widerstehen würde.

Nachteilig ist ferner die notwendige Dicke der Auskleidung, da die Auskleidung die Funktion eines Rohr-in-Rohrsystems übernimmt. Des weiteren hat eine derartige Auskleidung eine hohe offene Porosität, so daß Wasser und Schadstoffe eindringen und das Auskleidungsmaterial kontaminieren beziehungsweise chemisch angreifen können.

Ein Beispiel für ein derartiges Verfahren ist in DE 30 41 973 beschrieben.

Ein weiteres Verfahren (DE 44 24 643 A1) beruht darauf, daß Zementmörtelauskleidung mit (wie oben ausgeführt) oder ohne Faserzusatz zusätzlich an der innen liegenden Oberfläche abschließend mit Kunststoff versiegelt wird. Hierbei kann der Mörtel meist nicht genügend aushydrieren, da anderenfalls Wartezeiten von mehreren Wochen vor Aufbringung der Versiegelung erforderlich wären. Blasen und Absprengungen sind dadurch erfahrungsgemäß vorprogrammiert. Im übrigen hat das fertige Material beziehungsweise die Auskleidung die gleichen ungünstigen Eigenschaften wie das zuvor bezeichnete, nämlich geringe Haftfähigkeit beziehungsweise Anhangskraft, hohe Sprödheit und geringe Elastizität.

Eine Auskleidung mit Gewebeschläuchen, mit PE-HD-Rohren oder sonstigen lose eingeschobenen oder zu verklebenden Inlinern kommt mangels ausreichender Temperaturbeständigkeit und/oder anderer Nachteile, wie zum Beispiel hohem Installationsaufwand und hoher Kosten, insbesondere bei Fernwärmeleitungssystemen, von vornherein nicht in Frage.

Für Fernwarmeleitungen, insbesondere für Hochtemperaturleitungen wird mit der Erfindung vorteilhaft die Sanierung mit handelsüblichen Rohrsanierungsgeräten möglich.

In der WO-A-9 412 820 wird eine Innenauskleidung eines Rohres mit einer mineralischen Komponenten auf der Basis von hydraulischen Bindemitteln mit einer Komponenten aus Latexpolymeren beschrieben.

Aufgabe der vorliegenden Erfindung ist es, ein aushärtbares Beschichtungsmaterial, sowie eine Beschichtung und ein Verfahren zur Beschichtung zu schaffen, welches eine perforierte Rohrleitung, insbesondere Fernwärmeleitungssystem abdichtet oder/und die durch Korrosion hervorgerufene Schwächungen aufhebt. Besonders bei Fernwärmeleitungssystemen soll die Innendruckfestigkeit wiederhergestellt werden. Die Beschichtung soil hohen Temperaturen standhalten sowie die Erwarmung der Stahlrohre vermindern. Des weiteren ist es Aufgabe der Erfindung, eine weitere Korrosion an der Rohrleitung zu verhindern, den Rohrquerschnitt dabei nur unwesentlich zu reduzieren sowie eine geringe Rauhigkeit zu erzeugen.

Die Aufgabe wird durch die Merkmale der Ansprüche 1 und 7 sowie 12 gelöst. Weitere vorteilhafte Ausgestaltungen der Erfindung sind in den Unteransprüchen angegeben.

Das erfindungsgemäße aushärtbare Beschichtungsmaterial für Rohrleitungen insbesondere für unter erhöhten Druck betriebenen Fernwärmeleitungen, besteht aus einer mineralischen Komponente auf der Basis von hydraulischen Bindemitteln mit einem Anteil von mindestens 50 Gew.-% und höchstens 97 Gew.-%, Wasser und einer Komponente aus Latex mit einem Anteil von mindestens 3 Gew.-% und höchstens 50 Gew.-%.

In einer speziellen Zusammensetzung enthält das aushärtbare Beschichtungsmaterial als mineralische Komponente Zement und als Latexkomponente natürliches Latex.

Die günstigen Materialeigenschaften werden durch die erfindungsgemäße Rezeptur der zu verarbeitenden Mischung erzielt. Hierdurch wird eine hohe Elastizität eines ausschließlich aus natürlichen Rohstoffen bestehenden, insbesondere zementbasierten Produkts erreicht, ohne daß andere Eigenschaften wie z. B. Entflammbarkeit. Temperaturbeständigkeit, Druckfestigkeit etc. beeinträchtigt sind. Das Beschichtungsmaterial verstärkt die Haftung auf den unterschiedlichsten Materialien wie Stahl, Glas, Bitumen, Keramik, Gummi etc. wesentlich bzw. macht sie überhaupt erst möglich.

Aufgrund der hohen Basizität des ausgehärteten Materials ist ein hoher Korrosionsschutz für den Stahl (in der Regel St 35) gegeben. Die Verarbeitungsweise entspricht derjenigen eines üblichen Zementmörtels.

Dem aushärtbaren Beschichtungsmaterial wird in einer besonders vorteilhaften Variante eine die Fließeigenschaft verbessernde Komponente und/oder Verstärkungs- oder Stützungskomponenten oder/und Füllstoffe beigemischt.

Als vorteilhaft die Fließeigenschaft verbessernde bzw. die Oberflachenspannung reduzierende Komponente werden insbesondere nichtionische Tenside mit höchstens 3 Gew.-% beigemischt.

Dem aushärtbaren Beschichtungsmaterial werden in einer speziellen Variante als Verstärkungs- oder Stützungskomponenten oder/und Füllkomponente faserartige Stoffe. alkali-beständige Glasfasern und/oder Gummigranulat und/oder Sand beigemischt. Durch die Verwendung verschiedenster Stützungs- und/oder Füllstoffe ist das Beschichtungsmaterial auf die unterschiedlichen Anwendungen einstellbar. Das aushärtbare Beschichtungsmaterial weist eine Temperaturbeständigkeit von bis zu 250 °C, insbesondere bis zu 210 °C auf, so daß es vorteilhaft in einem großen Temperaturbereich und Temperaturschwankungsbereich einsetzbar ist.

Das erfindungsgemäße Beschichtungsmaterial ist gut verarbeitbar und läßt sich sowohl in kleine als auch in große Rohre bis hin zu begehbaren Kanälen einbringen.

Die Beschichtung zur Auskleidung von Rohrleitungen ist dadurch gekennzeichnet, daß die Beschichtung aus dem erfindungungsgemäßen Beschichtungsmaterial in einer Schichtdicke von 1 bis 30 mm besteht. Insbesondere kann die Beschichtung für unter Druck betriebene Fernwärmeleitungen eingesetzt werden.

Vorteilhaft ist die insbesondere gegenüber Zement höhere Säure- und Laugenbeständigkeit sowie geringere Wasseraufnahmefähigkeit. Des weiteren ist eine derartige Beschichtung wasserundurchlässig.

Die Beschichtung besteht in einer speziellen Ausführungsform aus dem erfindungsgemäßen Beschichtungsmaterial sowie einer weiteren insbesondere elastischen Beschichtung.

In einer besonders vorteilhaften Ausgestaltung sind zwischen der ersten Beschichtungsschicht und der zweiten Beschichtungsschicht oder in der zweiten Beschichtungsschicht Signalleitungen wie z. B. Leckageüberwachungsleitungen angeordnet. Die zweite Beschichtung wird in einer Stärke von ein bis fünf Millimetern aufgetragen. Dies erlaubt das Einschließen von dünnen, temperaturfesten Signalleitungen in die Schicht, so daß diese Leitungen vorteilhaft nicht separat. außerhalb der Rohrleitungen verlegt werden müssen.

Die Beschichtungsschicht besteht aus dem erfindungsgemäßen Beschichtungsmaterial. In der Beschichtung ist ein textiles Flächengebilde oder Endlosstrumpf wie zum Beispiel ein Gestrick, Gewebe oder Geflecht aus Metalldraht angeordnet. Dadurch wird vorteilhaft die Statik verbessert sowie insbesondere die Zugfestigkeit erhöht. Besonders vorteilhaft ist die Verwendung von Edelstahldrähten für das textile Flächengebilde mit einem Durchmesser von 0,1 bis 0,5 mm.

Der Rohrquerschnitt wird durch die Beschichtung nur unwesentlich reduziert. Auch weist die Beschichtung nur eine geringe Rauhigkeit auf, so daß Druckverluste bei der Durchströmung gering gehalten werden.

Der Innendruck kann in einer Fernwärmeleitung bis zu 16 bar betragen, die Nenntemperatur liegt bei 210°C.

Die Einheit aus Beschichtung und Stahlrohr widersteht Wärmedehnungen, die durch Temperaturschwankungen zwischen 20 und 210°C bewirkt werden. Da durch die Innenbeschichtung die Erwärmung des Stahlrohrs wesentlich vermindert wird, werden die Wärmedehnungseffekte gegenüber unbehandelten Rohrstrecken reduziert. Hierdurch wiederum können Dehnungsausgleichsbögen zumindest teilweise entfallen bzw. durch einfache Kompensatoren ersetzt werden. Eine mechanische Beanspruchung der Beschichtung durch einen Meißel sowie durch einen Wasserhöchstdruckstrahl von 2000 bar verursacht kein flächenhaftes Absprengen der Beschichtung von den Rohren.

Das erfindungsgemäße Verfahren zur Beschichtung von Rohrleitungen ist dadurch gekennzeichnet, daß nach der Reinigung mittels einer mechanischen Vorrichtung der zu beschichtende Rohrleitung eine erfindungsgemäße Beschichtung mittels eines Lamellenschleuderkopfes an die Rohrwandung aufgeschleudert wird. Besonders vorteilhaft ist der Einsatz einer Wasserhochstdruckstrahlvorrichtung als mechanische Reinigungseinrichtung. Allerdings können auch mechanische Kratzvorrichtungen oder Sandstrahlvorrichtungen eingesetzt werden.

Durch dieses Verfahren wird eine von lockerem, nicht festhaftenden oder artfremden Material befreite Rohrwandung geschaffen, auf der die aufgeschleuderte Beschichtung sehr gut haftet, welche etwaigen Temperaturdehnungen infolge hoher Elastizität nachgibt beziehungsweise folgt, ohne sich zu lösen. Zur Reinigung eignen sich besonders mechanische Vorrichtungen wie Wasserhöchstdruckstrahlvorrichtungen wie sie zum Beispiel in WO 95/31295 beschrieben wird. Allerdings sind andere Vorrichtungen wie mechanische Kratzvorrichtungen und Sandstrahlvorrichtungen ebenfalls vorteilhaft einsetzbar. um einen sauberen, tragfähigen Untergrund zu behalten.

Ein Ausführungsbeispiel wird im folgenden beschrieben:

Ein Rohrleitungsabschnitt aus Stahl mit dem Durchmesser von 300 mm (DN 300) wird von innen mittels einer mechanischen Vorrichtung wie zum Beispiel einer Wasserhöchstdruckstrahlvorrichtung von Rost und Inkrustierungen derart gereinigt, daß die innere Rohrwandung einen Reinheitsgrad gemäß der deutschen Sandstrahlnorm SA 1 (DIN-Norm) aufweist. Flugrost stört nicht. Bei Dampfleitungen kann auf die Reinigung gegebenenfalls verzichtet werden. In diesem Ausführungsbeispiel beträgt der Rohrleitungsabschnitt 150 m. Anschließend wird eine luftbetriebene Lamellenschleuderkopfvorrichtung durch den Rohrabschnitt gezogen, wobei das Beschichtungsmaterial mit einer Vorschubgeschwindigkeit des Schleuderkopfes von 0,5 bis 1m/min. auf die Innenwandung des Rohrleitungsabschittes wellenfrei und gleichmäßig aufgeschleudert wird. Die Beschichtungsdicke beträgt zwischen 3 und 5 mm. Die Erstarrungszeit beträgt 3 bis 5 Stunden. Eine kontinuierliche Kontrolle der Schichtdicke und Anhaftung, die abhängig von der Konsistenz ist, ist während des gesamten Durchlaufes möglich. Fehlstellen können überarbeitet werden. Fehlbeschichtungen sind innerhalb einer Woche nach der Beschichtung ausschließlich durch Wasserhöchstdruckstrahlverfahren zu entfernen. Eine visuelle Überprüfung wie auch eine Wasserdruckprüfung kann nach einer Woche durchgeführt werden.

Das als Mörtelbrei zu verarbeitende aushärtbare Beschichtungsmaterial (Fertigmischung) wird beispielsweise gemischt aus:
- 1 Gew.-Teil Trockenkomponente, bestehend aus 0,6 Gew.-Teile Zement (PZ 52,5) und 0,4 Gew.-Teile Gummigranulat (Körnung -0,2) trocken vorgemischt und
- 0,6 Gew.-Teile Flüssigkomponente, bestehend aus 0.24 Gew.-Teile Naturlatex und 0,36 Gew.-Teile Wasser.

Die beiden Komponenten werden in einem handelsüblichen Zementmischer vermischt.

## Patentansprüche

1. Aushärtendes Beschichtungsmaterial zur Auskleidung oder Innenbeschichtung von Rohrleitungen, insbesondere für Fernwärmeleitungen, bestehend aus einer mineralischen Komponente auf der Basis von hydraulischen Bindemitteln mit einem Anteil von mindestens 50 Gew.-% und höchstens 97 Gew.-%, Wasser und einer Komponente aus natürlichem Latex mit einem Anteil von mindestens 3 Gew.-% und höchstens 50 Gew.-%.

2. Aushärtendes Beschichtungsmaterial nach Anspruch 1,
dadurch gekennzeichnet, daß
als mineralische Komponente Zement eingesetzt wird.

3. Aushärtendes Beschichtungsmaterial nach Anspruch 1 oder 2,
dadurch gekennzeichnet, daß
dem Beschichtungsmaterial eine die Fließeigenschaft verbessernde Komponente und /oder Verstärkungs- oder Stützungskomponenten oder/und Füllstoffe beigemischt werden.

4. Aushärtendes Beschichtungsmaterial nach Anspruch 3,
dadurch gekennzeichnet, daß
als die Fließeigenschaft verbessernde Komponente Tenside mit höchstens 3 Gew.-% beigemischt werden.

5. Aushärtendes Beschichtungsmaterial nach Anspruch 3 oder 4,
dadurch gekennzeichnet, daß
als Verstärkungs- oder Stützungskomponenten oder/und Füllkomponente faserartige Stoffe oder alkali-beständige Glasfasern und/oder Gummigranulat und/oder Sand beigemischt werden.

6. Aushärtendes Beschichtungsmaterial nach Anspruch 1 bis 5,
dadurch gekennzeichnet, daß
das Beschichtungsmaterial Komponenten enthält, welche eine Temperaturbeständigkeit von bis zu 250 °C, insbesondere bis zu 210 °C aufweisen.

7. Beschichtung zur Auskleidung von Rohrleitungen,
dadurch gekennzeichnet, daß
die Beschichtung aus Beschichtungsmaterial nach Anspruch 1 bis 6 in einer Schichtdicke von 1 bis 30 mm besteht.

8. Beschichtung nach Anspruch 7,
dadurch gekennzeichnet, daß
auf der Beschichtung aus Beschichtungsmaterial nach Anspruch 1 bis 6 eine weitere elastische Beschichtung angeordnet ist.

9. Beschichtung nach Anspruch 7 oder 8,
dadurch gekennzeichnet, daß
zwischen Beschichtungsschicht und einer zweiten Beschichtungsschicht oder in die zweite Beschichtungsschicht Signalleitungen angeordnet sind.

10. Beschichtung nach Anspruch 7 bis 9,
dadurch gekennzeichnet, daß
die zweite Beschichtungsschicht aus einem Beschichtungsmaterial nach den Ansprüchen 1 bis 6 besteht.

11. Beschichtung nach Anspruch 7 bis 10,
dadurch gekennzeichnet, daß
in der Beschichtung ein textiles Flächengebilde oder Endlosstrumpf aus Metalldraht angeordnet ist.

12. Verfahren zur Beschichtung von Rohrleitungen,
dadurch gekennzeichnet, daß
in der zu behandelnden Rohrleitung nach der Reinigung mittels einer mechanischen Vorrichtung eine Beschichtung nach Anspruch 7 bis 11 mittels eines Lamellenschleuderkopfes auf die Rohrwandung aufgeschleudert wird.

13. Verfahren nach Anspruch 12,
dadurch gekennzeichnet, daß
als mechanische Vorrichtung eine Wasserhöchstdruckstrahlvorrichtung oder eine Kratzvorrichtung oder eine Sandstrahlvorrichtung eingesetzt wird.

## Claims

1. Age-hardening coating material for covering or internally coating conduits, more especially for long-distance heating pipes, comprising a mineral component based on hydraulic bonding agents with a proportion of at least 50 % by wt. and at most 97 % by wt. water and a component of natural latex with a proportion of at least 3 % by wt. and at most 50 % by wt.

2. Age-hardening coating material according to claim 1, characterised in that cement is used as the mineral component.

3. Age-hardening coating material according to claim 1 or 2, characterised in that a component, which improves the flow property, and/or reinforcing or supporting components or/and filler substances are added to the coating material.

4. Age-hardening coating material according to claim 3, characterised in that surfactants, with 3 % by wt. at most, are added as the component which improves the flow property.

5. Age-hardening coating material according to claim 3 or 4, characterised in that fibre-like substances or alkali-resistant glass fibres and/or rubber granulate and/or sand are added as the reinforcing or supporting components or/and filler component.

6. Age-hardening coating material according to claims 1 to 5, characterised in that the coating material contains components which have a temperature resistance of up to 250° C, more especially up to 210° C.

7. Coating for covering pipelines, characterised in that the coating is formed from coating material according to claims 1 to 6 in a layer thickness of between 1 and 30 mm.

8. Coating according to claim 7, characterised in that an additional resilient coating is disposed on the coating formed from coating material according to claims 1 to 6.

9. Coating according to claim 7 or 8, characterised in that indicating lines are disposed between coating layer and a second coating layer or in the second coating layer.

10. Coating according to claims 7 to 9, characterised in that the second coating layer is formed from a coating material according to claims 1 to 6.

11. Coating according to claims 7 to 10, characterised in that a flat textile structure or endless stocking-like tube formed from metal wire is disposed in the coating.

12. Method of coating pipelines, characterised in that a coating according to claims 7 to 11 is centrifuged onto the pipe wall by means of a segmental centrifugal head in the pipeline to be treated after the cleaning process has been accomplished by means of a mechanical apparatus.

13. Method according to claim 12, characterised in that a maximum-pressure water-jet apparatus or a scraping apparatus or a sandblasting apparatus is used as the mechanical apparatus.

## Revendications

1. Matériau de revêtement durcissable pour garnissage ou chemisage de canalisations, en particulier conduites de chauffage central, comprenant un composant minéral à base de liants hydrauliques en une proportion d'au moins 50 % et au maximum 97 % en poids d'eau , et un composant à base de latex naturel en une proportion d'au moins 3 % et au maximum 50 % en poids.

2. Matériau de revêtement durcissable selon la revendication 1, caractérisé en ce qu'à titre de composant minéral, on utilise du ciment.

3. Matériau de revêtement durcissable selon la revendication 1 ou 2, caractérisé en ce qu'on mélange au matériau de revêtement un composant ameliorant l'aptitude à l'écoulement et/ou des composants de renforcement ou de support et/ou des matières de charge.

4. Matériau de revêtement durcissable selon la revendication 3, caractérisé en ce qu'à titre de composants améliorant l'aptitude à l'écoulement, on mélange des agents tensio-actifs à raison de 3 % en poids, au maximum.

5. Matériau de revêtement durcissable selon la revendication 3 ou 4, caractérisé en ce qu'à titre de composants de renforcement ou de support et/ou composants de charge, on mélange des matières de type fibres ou des fibres de verre résistantes aux alcalis et/ou des granules de caoutchouc et/ou du sable.

6. Matériau de revêtement durcissable selon les revendications 1 à 5, caractérisé en ce que le matériau de revêtement contient des composants qui présentent une tenue en température pouvant atteindre 250 °C, en particulier pouvant atteindre 210 °C.

7. Revêtement de garnissage pour canalisations, caractérisé en ce que le revêtement se compose d'un matériau de revêtement selon les revendications 1 à 6, en une épaisseur de couche de 1 à 30 mm.

8. Revêtement selon la revendication 7, caractérisé en ce qu'on applique un revêtement élastique supplémentaire sur le revêtement en matériau de revêtement selon les revendications 1 à 6.

9. Revêtement selon la revendication 7 ou 8, caractérisé en ce qu'entre la couche de revêtement et une deuxième couche de revêtement, ou dans la deuxième couche de revêtement, on place des conduites de signalisation.

10. Revêtement selon les revendications 7 à 9, caractérisé en ce que la deuxième couche de revêtement se compose d'un matériau de revêtement selon les revendications 1 à 6.

11. Revêtement selon les revendications 7 à 10, caractérisé en ce qu'on place dans le revêtement une structure de nappe textile ou un bas continu en fil métallique.

12. Procédé de revêtement de canalisations, caractérisé en ce qu'après nettoyage au moyen d'un dispositif mécanique, un revêtement selon les revendications 7 à 11 est appliqué par centrifugation dans la canalisation à traiter, sur la paroi du tuyau, au moyen d'une tête centrifugeuse à lamelles.

13. Procédé selon la revendication 12, caractérisé en ce qu'à titre de dispositif mécanique, on utilise un dispositif à pression de jet d'eau maximum ou un dispositif de raclage ou un dispositif de sablage.
